# EUROPÄISCHE PATENTSCHRIFT

(11) **EP 2 991 869 B1**
(45) Veröffentlichungstag und Bekanntmachung des Hinweises auf die Patenterteilung: **01.02.2017**
(21) Anmeldenummer: 14728416.0
(22) Anmeldetag: 22.04.2014
(51) Int. Cl.: B60T 13/74, F16D 55/08, F16D 55/224, F16D 63/00, F16D 65/095, F16D 65/18, F16D 65/46

(54) **ELEKTROMAGNETISCHE AKTIVBREMSE**
ACTIVE ELECTROMAGNETIC BRAKE
FREIN ACTIF ÉLECTROMAGNÉTIQUE

(30) Priorität: 30.04.2013 DE 102013007402
(43) Veröffentlichungstag der Anmeldung: 09.03.2016
(73) Patentinhaber: Ringspann GmbH, 61348 Bad Homburg (DE)
(72) Erfinder: POLACK, Hans-Joachim, 39418 Stassfurt / Ortsteil Neundorf (DE); BISCHOFF, Hartmut, 39418 Stassfurt (DE)
(74) Vertreter: Lemcke, Brommer & Partner Patentanwälte Partnerschaft mbB
(86) Internationale Anmeldenummer: PCT/DE2014/000210
(87) Internationale Veröffentlichungsnummer: WO 2014/177128

(56) Entgegenhaltungen:
- DE-A1- 10 201 607
- GB-A- 973 506

## Beschreibung

### Stand der Technik

Die Erfindung geht aus von einer elektromagnetischen Aktivbremse, die im Zustand der Bremsbereitschaft, also im geöffneten Zustand, stromlos ist, beispielsweise einer Schwimmsattelbremse, nach der Gattung des Anspruchs 1.

Zur Vermeidung der mit der Verwendung und Absicherung von pneumatischer oder hydraulischer Energie verbundenen Nachteile werden anstelle pneumatischer und hydraulischer Bremssysteme elektromagnetische Bremssysteme in Kombination mit Federn eingesetzt. So ist es bei Antrieben für Garagen-Kipptore mit einem elektrischen Linearmotor bereits bekannt, zum Abbremsen der Übertragungsstange des Linearmotors eine Schwimmsattelbremse zu verwenden, die in dem eingerückten Zustand vorgespannt ist. Die freien Enden der Bremsbacken sind mit dem Gehäuse bzw. dem Abtriebsteil eines Elektromagneten verbunden, dessen Anker mittels einer Feder in die Einwärtsrichtung vorgespannt ist, so dass die Bremsbacken im Ruhezustand fest an den Seitenflächen der Übertragungsstange anliegen. Bei Erregung des Elektromagneten werden die Bremsbacken von der Übertragungsstange abgehoben (DE G 83 08 714.1). Diese Bremsanordnung ist vorteilhaft dort anwendbar, wo der Betriebszustand überwiegend ein Ruhezustand ist, die Bremsen also aktiv an dem zu bremsenden Teil anliegen, im vorliegenden Fall also sich stromlos durch Federkraft in Bremsposition befinden. Lediglich für eine verhältnismäßig kurze Zeitdauer, hier während des Öffnens oder Schließens des Garagentores, werden sie durch einen elektrischen Impuls gelüftet. Für ein kurzzeitiges Abbremsen überwiegend in Bewegung befindlicher Teile ist diese technische Lösung nicht geeignet, da zum Offenhalten der Bremse in Bremsbereitschaftsstellung ständig Strom am Elektromagneten anliegen müsste, was einen hohen Energieverbrauch zur Folge hätte.

Bekannt ist ferner eine Schwimmsattelbremse mit einem festen und einem beweglichen Reibbremsbelag und einer elektromechanischen Betätigungseinrichtung zum Drücken ihres beweglichen Reibbremsbelages gegen eine Bremsscheibe. Sie weist eine Einrichtung zur Einstellung eines Lüftspiels mit einer Schraubendruckfeder auf, die einen Stößel axial beaufschlagt und den Bremssattel beim Lösen der Schwimmsattelbremse zurückstellt und dadurch ein Lüftspiel zwischen den Reibbremsbelägen und der Bremsscheibe auf beiden Seiten der Bremsscheibe einstellt. (DE 10 2006 018 953 A1). Der Nachteil dieser Schwimmsattelbremse besteht darin, dass die elektromagnetische Betätigungseinrichtung, die in der Regel ein Elektromotor ist, sowohl den Bremsvorgang als auch das Lüften der Bremse ausführt, also für beide Vorgänge, Elektroenergie benötigt. Außerdem muss das Drehmoment des Elektromotors über ein Getriebe in ein verwertbares Stellmoment umgewandelt werden. Elektromotor und Getriebe vergrößern die Bauweise und erhöhen die Herstellungskosten der Schwimmsattelbremse.

Eine ebenfalls im Bremszustand stromlose Zangenbremse mit automatischem Nachstellen bei Bremsbelagverschleiß ist dadurch gekennzeichnet, dass zum Nachspannen einer vorgespannten Speicherfeder jener zusätzliche Weg verwendet wird, den die Bremsklötze für das Anlegen an einem abzubremsenden Teil nach Überschreiten einer einstellbaren Verschleißtoleranzgrenze über den zuvor eingestellten Weg hinaus zurücklegen müssen. Während des Lösens der Bremse wird die Kraft der Speicherdruckfeder freigegeben, indem ein erregter Elektromagnet die Bremskraftdruckfeder zusammendrückt und über einen nun einrastenden Freilauf bzw. über Nachspannelemente, beispielsweise eine Exzenterwelle oder Mutternhülse, den Abstand der Bremshebellager zueinander verringert, so dass der Anlegeweg der Bremsklötzer verringert und damit der Verschleiß kompensiert wird (DE 10 2008 015 743 A1).

Eine sehr kompakte, betriebssichere und eine weitgehend verschleißunabhängige Bremswirkung aufweisende Feststellbremse zum Fixieren einer drehbaren Bremsbewegung weist zwei Bremsbacken auf, die über eine Bremszange betätigbar sind. Die Arme der Bremszange sind über ein Stellglied mit einer Druckfeder und das Stellglied über einen Übersetzungshebel mit dem Anker eines Elektromagneten verbunden. Im stromlosen Zustand drückt die Feder die beiden Bremsbacken gegen das abzubremsende Bauteil. Zum Lüften der Bremsbacken wird der Elektromagnet bestromt, wodurch sich sein Anker zur Ankerklebefläche bewegt und dabei die Ankerspindel über den Übersetzungshebel das Stellglied entgegen der auf dieses wirkenden Feder zurückzieht, so dass die zwischen den Bremsarmen angeordnete Zugfeder die beiden Bremsarme in Sinne des Lüftens der Bremse verschwenkt (DE 103 15 985 A1).

Bei diesen beiden technischen Lösungen besteht der Nachteil in der Beschränkung der Anwendung auf solche Aggregate, Maschinenteile oder Transportvorrichtungen, die während ihres Betriebszustandes öfters oder regelmäßig abgebremst werden müssen, wie Rolltreppen, Fahrstühle für Personen und Lasten, rotierende oder translatorisch bewegte Maschinenteile und deshalb der aktive Bremsvorgang stromlos ausgeführt werden muss, um auch bei Ausfall der Stromversorgung funktionssicher abbremsen zu können.

Bekannt ist ferner eine Notbremsvorrichtung für ein Personenbeförderungssystem, beispielsweise einer Rolltreppe, die zu jedem Zeitpunkt eine zur Fahrgastlast proportionale Bremskraft liefert. Im Betriebszustand hält ein Elektromagnet die Bremsklötze außer Eingriff von der Bremsscheibe. Mit dem Elektromagneten verbundene Druckkolben greifen an mit den Bremsklötzen verbundenen Bremshebeln an. Die Bremshebel sind außerdem mit verstellbaren Druckfedern verbunden, deren Federkraft in Abhängigkeit von der Belastung des Beförderungssystems jeweils mittels eines umschaltbaren Elektromotors einstellbar ist (DE 694 19 124 T2).

Der Nachteil dieser Notbremsvorrichtung besteht darin, dass zur Aufrechterhaltung des Betriebszustands der Elektromagnet ununterbrochen bestromt werden muss, was einen verhältnismäßig hohen Energieverbrauch zur Folge hat.

Bekannt ist ferner eine als Aktivbremse wirkende Schwimmsattelscheibenbremse für ein Kraftfahrzeug mit einem fahrzeugfesten Bremshalter, einem verschiebbar am Bremshalter gelagerten Schwimmsattel, einer auf einer Bremsscheibenseite angeordneten Bremsbetätigungsvorrichtung zur direkten Bremskraftbeaufschlagung wenigstens eines Bremsbelages sowie mit einer Vorrichtung zur Lüftspieleinstellung. Der axial außenliegende Bremsbelag wird mittels Zugfedern gegenüber dem Schwimmsattelschenkel vorgespannt. Als Verstellvorrichtung zur Lüftspieleinstellung dient ein elektrischer Hubmagnet mit einem Anker, der mit einem Stößel verbunden ist, über den die bei Bestromung des Hubmagneten entstehende Verstellkraft auf den Bremsbelag übertragen wird. Die Aufbringung der Bremszuspannkraft kann elektromagnetisch erfolgen (DE 101 57 324 A1).

Schließlich ist eine Scheibenbremse mit einer Betätigungsvorrichtung bekannt, die über eine Selbstverstärkungsvorrichtung an zumindest einen Bremsbelag gekoppelt ist. Ein als Schwimmsattel ausgebildeter Bremssattel umgreift eine Bremsscheibe sowie die beiderseits der Bremsscheibe angeordneten Bremsbeläge. Die Betätigungsvorrichtung weist einen translatorisch wirksamen Elektromagneten mit einer Spule auf, die bei Bestromung eine am Spulenkern anliegende Betätigungskraft zum Zuspannen der Scheibenbremse bewirkt. Eine fahrzeugfest angebrachte Feder wirkt auf die Selbstverstärkungsvorrichtung in der Weise ein, das diese durch die Kraft der Feder entgegen der Hauptdrehrichtung der Bremsscheibe vorgespannt wird, so dass die Feder dem Effekt der Selbstverstärkung entgegenwirkt. In der Folge wird die Scheibenbremse bei einer Reduzierung der Bremszuspannkraft, etwa nach beendeter Bremsbetätigung, durch die Kraft der Feder in Löserichtung entspannt. Dadurch wird mit lediglich einer translatorisch wirksamen Spule die Bremszuspannkraft exakt dosierbar geregelt. Hierzu wird eine Steuereinrichtung verwendet, die eine gezielte Ansteuerung bzw. Bestromung der Spule ermöglicht (DE 102 01 607 A1). Der Nachteil dieser Scheibenbremse besteht darin, dass sie zur Aufbringung der Bremskraft immer eine Selbstverstärkungsvorrichtung erfordert, d. h. dass die Betätigungsvorrichtung selbst, im vorliegenden Fall der translatorisch wirksame Elektromagnet, die auf die Bremsscheibe aufzubringende Bremskraft nicht aufbringen kann. Der in der Betätigungseinrichtung verwendete Tauchankermagnet dient lediglich als Steuermagnet für den Bremskraftverstärker. Zudem ist ihre Anwendung auf solche Einrichtungen und Anlagen beschränkt, deren Bewegungsablauf aufgrund häufig wechselnder Ereignisse und Situationen über Bremsvorgänge gesteuert werden muss, was beispielweise beim Fahren eines Fahrzeugs der Fall ist.

Eine elektromechanische Aktivbremse, bei der die Bremskraft hydraulisch übertragen wird, ist außerdem in der Schrift GB 973,506 beschrieben.

### Die Erfindung und ihre Vorteile

Die erfindungsgemäße elektromagnetische Aktivbremse mit dem kennzeichnenden Merkmal des Anspruchs 1 hat demgegenüber den Vorteil, dass sie lediglich für den Bremsvorgang Elektroenergie benötigt. In ihrer Ruhestellung, also im gelüfteten Zustand, ist sie stromlos. Zum Bremsen ist auch nur zur Einleitung des Bremsvorgangs ein gezielter Energieimpuls in Form eines kurzzeitigen Stromstoßes erforderlich. Damit ist die erfindungsgemäße Aktivbremse sehr energie- und damit auch kostensparend. Im Vergleich zu pneumatischen oder hydraulischen aktiven Bremssystemen benötigt sie lediglich 3% der Energie.

Aufgrund ihres geringen Energieverbrauchs ist die elektromagnetische Aktivbremse bei solchen Anlagen, Aggregaten oder Maschinen besonders vorteilhaft einsetzbar, die über längere Zeiträume ununterbrochen in Betrieb sind, d. h. bei denen Teile ständig rotieren oder sich translatorisch bewegen und lediglich in Havariefällen oder zum Zweck der Wartung, Beschickung oder Entleerung außer Betrieb gesetzt werden müssen, wie z. B. Windkraftanlagen, Turbinen, Drehrohröfen. Bei diesen Anwendungen macht der Bremsvorgang nur einen Bruchteil der Betriebszeit aus. Ferner ist die Erfindung auch dort vorteilhaft anwendbar, wo Drehzahlen gezielt gesteuert werden müssen, beispielsweise bei Prüfständen und Schleudergussanlagen von Gießereien.

Ein weiterer Vorteil der Aktivbremse besteht in ihrer sehr großen Klemmkraft, die gegenüber üblichen Sicherheitsbremsen, z. B. einer Fail-Safe-Bremse, zu erzielen ist. Die hohe Klemmkraft resultiert daraus, dass der Bremsvorgang gegen die steigende Druckkraft einer Feder arbeitet. Dadurch ist es auch möglich, die Baugröße der Aktivbremse wesentlich zu verkleinern und somit auch kostengünstiger herzustellen. Durch ihre kompakte Bauweise erfordert sie eine geringeren Bauraum und lässt sich auch einfacher an den Anlagen, Aggregaten oder Maschinen anbringen.

Diese Vorteile werden dadurch erreicht, dass der Bremsvorgang unabhängig von dem während der Bestromung des Elektromagneten vom Anker bis zu seinem Anschlag an der Ankerklebefläche zurückzulegenden Weg ablaufen kann. Während der kurzzeitigen Bestromung des Elektromagneten bewegt sich dessen Anker unabhängig von dem aktuellen Stand des Bremsvorgangs, d. h. der Stellung der Bremsbacken zu dem abzubremsenden Teil, beispielsweise einer Bremsscheibe, immer bis zu seiner Ankerklebefläche, so dass die maximale Anzugskraft des Elektromagneten für den Bremsvorgang zur Verfügung steht. Zu diesem Zweck steht der Anker nicht direkt, sondern über einen Federspanner mit dem eigentlichen Bremshebel, der zumindest eine der Bremsbacken an das abzubremsende Teil drückt, in Wirkverbindung. Der Anker ist mit dem Federspanner fest verbunden, der somit die gleiche axiale Bewegung wie der Anker ausführt. Der Federspanner wirkt seinerseits auf eine Feder, die mit ihrem gegenüberliegenden Ende an einem Widerlager aufliegt. Dadurch wird mit der Einleitung des Bremsvorgangs durch einen Stromimpuls mit der Bewegung des mit dem Anker verbundenen Federspanners zunächst die vorgespannte Feder unverändert zusammen mit ihrem Widerlager nach unten bewegt. Durch eine Wirkverbindung des Widerlagers mit dem Bremshebel wird dieser nach unten gedrückt, wodurch sich zumindest eine der Bremsbacken an dem abzubremsenden Teil anlegt. Damit ist die freie, d. h. quasi kraftlose, Bewegung des Federspanners zu Ende. Da der Anker in dieser Position jedoch noch nicht die Ankerklebefläche erreicht, also noch nicht seine stabile Position eingenommen hat, wird der Federspanner von dem Anker weiter mitgenommen, wobei er nunmehr die Feder spannt bis er an der Ankerklebefläche anliegt. Die dabei aufgebaute Federkraft wird auf den Bremshebel übertragen, der diese über eine Hebelanordnung verstärkt und als Bremskraft über die Bremsbacken auf das abzubremsende Teil überträgt.

Nach Abschaltung des Stromes löst sich der Anker von der Ankerklebefläche, die Feder entspannt sich und bewegt den Bremshebel und somit auch den Anker in seine Ausgangslage zurück. Wird der Bremshebel oder der Federspanner in seiner ausgelenkten Lage arretiert, kann der Strom am Elektromagneten abgeschaltet werden, ohne dass sich die Bremsbacken von dem abzubremsenden Teil lösen. Auf diese Weise realisiert die Bremse stromlos eine Klemmfunktion, sie wirkt quasi wie eine angezogene Handbremse.

Die Zwischenschaltung des Federspanners zwischen den Anker des Elektromagneten und den die Bremsbacke bzw. Bremsbacken bewegenden Bremshebel ermöglicht also für den Anker des Elektromagneten eine von dem Angriff der Bremsbacke bzw. Bremsbacken an dem abzubremsenden Teil unabhängige Bewegung in seine stabile Stellung an der Ankerklebefläche. Wie oben ausgeführt, spannt der Anker auf diesem Weg mittels des Federspanners die Feder, die, sobald die Bremsbacke bzw. Bremsbacken an dem abzubremsenden Teil anliegen, über den Bremshebel eine durch die Federkraft bestimmte Bremskraft ausübt. Somit kann zusätzlich zu der durch die Lagerung des Bremshebels gegebenen Möglichkeit über die Einstellung der Vorspannung der Feder die Stärke der Bremskraft eingestellt werden.

Die Feder übernimmt damit drei Funktionen:
1. Einstellung der Bremskraft,
2. Rückstellung des Federspanners mit dem Anker in seine Ausgangslage,
3. Kraftvariables Stellglied zwischen Magnetanker und Ankerklebefläche.

Die erfindungsgemäße elektromagnetische Aktivbremse ist auch als Spreizeinheit für Trommelbremsen einsetzbar.

Nach einer vorteilhaften Ausgestaltung der Erfindung ist die elektromagnetische Aktivbremse als Schwimmsattelbremse ausgebildet. Dadurch wird ein beiderseitig gleichmäßiger Angriff der Bremsbacken an dem abzubremsenden Teil erreicht.

Nach einer anderweitigen vorteilhaften Ausgestaltung der Erfindung wird als Feder eine Druckfeder verwendet. Diese lässt sich im Bremsenkörper unterhalb des Federspanners unterbringen, wodurch eine kompakte Bauweise erreicht wird.

Nach einer diesbezüglich vorteilhaften Ausgestaltung der Erfindung besteht die Wirkverbindung des Widerlagers mit dem Bremshebel aus einem koaxial zu der Druckfeder und im Bremsenkörper axial beweglich angeordneten Führungsbolzen, der mit einem Joch fest verbunden ist, das über Mitnehmerlaschen (23) mit dem Bremshebel (2) gelenkig verbunden ist. Über das Joch und die mit diesem verbundenen Mitnehmerlaschen wird die Federkraft symmetrisch auf den Bremshebel übertragen, der diese, verstärkt durch die zweiseitige Hebelanordnung mit einem gegenüber dem Lastarm um ein Vielfaches verlängerten Kraftarm, auf die Bremsbacken überträgt. Die Mitnehmerlaschen greifen beiderseits des Bremshebels an und sind gelenkig mit diesem verbunden.

Durch den Führungsbolzen erhalten Federspanner und Druckfeder eine zusätzliche Führung, was wiederum die Stabilität der durch den Stromimpuls hochbeanspruchten, aus Federspanner, Feder und Widerlager bestehenden beweglichen Baugruppe erhöht. Das Widerlager ist durch an dem Führungsbolzen kraft- und/oder formschlüssig angreifende Mittel, beispielsweise eine Kontermutter oder eine radial zum Führungsbolzen wirkende Feststellschraube, einstellbar und arretierbar. Die Vorspannung der Druckfeder ist durch eine Änderung der axialen Position des Widerlagers am Führungsbolzen auf einfache Weise einstellbar. Da die eingestellte Federkraft auf den Bremshebel wirkt, wird demzufolge dadurch auch die Bremskraft eingestellt. Je nachdem, ob der Federspanner bei Bestromung des Elektromagneten auf seinem synchron zum Anker verlaufenden Wege eine schwach oder stark vorgespannte Feder weiter komprimiert, wird auch die Bremskraft schwach oder stark sein.

Nach einer ebenfalls vorteilhaften Ausgestaltung der Erfindung wird der Führungsbolzen mit seinem oberen Ende von einer Führungsbohrung des Federspanners aufgenommen. Mit seinem unteren Ende ist er mit einer Hülse fest verbunden, die in dem Bremsengehäuse axial geführt ist. Dadurch wird eine achsparallele Führung zwischen Federspanner, Feder und Widerlager erreicht.

Nach einer zusätzlichen vorteilhaften Ausgestaltung der Erfindung ist die axiale Position des Federspanners gegenüber dem Bremsenkörper der Aktivbremse einstellbar und auch arretierbar. Da der Bremshebel mit dem Federspanner in Wirkverbindung steht, verharrt der Bremshebel ebenfalls in dieser Position, so dass auch die Bremsbacken an dem abzubremsenden Teil verbleiben. In diesem Zustand hat auch der Anker seine stabile Position an der Ankerklebefläche eingenommen, so dass die Bestromung des Elektromagneten abgeschaltet werden kann, ohne dass die Bremswirkung nachlässt. Die elektromagnetische Aktivbremse wirkt damit wie eine mechanische Handbremse.

Die axiale Einstellung und Arretierung des Federspanners lässt sich auf einfache Weise mittels eines durch diesen hindurchgeführten und in den Bremsenkörper einschraubbaren Gewindestift realisieren.

Nach einer anderweitigen vorteilhaften Ausgestaltung der Erfindung ist zwischen dem Bremshebel und dem Bremsenkörper eine Rückstellfeder angeordnet, die zum Ende des Bremsvorganges den Bremshebel und aufgrund der Wirkverbindung über den Federspanner mit ihm den Anker in seine Ausgangslage zurückdrückt. Durch die große Übersetzung bei der Übertragung der Bremskraft über den Bremshebel wirkt sich selbst ein kleines Lagerspiel seiner Lagerung im Bremskörper nachteilig auf die vollständige Rückstellung des Ankers aus. Um das Lüftspiel zwischen abzubremsendem Teil und Bremsbacken konstant zu halten, muss der Anker immer in seine Ausgangslage zurückbewegt werden. Hierzu gleicht die o. g. Rückstellfeder das Lagerspiel in der Lagerung des Bremshebels aus. Die Rückstellfeder kann vorteilhafterweise platzsparend koaxial zu dem o. g. Gewindestift angeordnet sein.

Nach einer zusätzlichen vorteilhaften Ausgestaltung der Erfindung stützt sich das Joch über mindestens eine zusätzliche untere Rückstellfeder an dem Bremsenkörper der Aktivbremse ab. Zwar muss diese mindestens eine Rückstellfeder ebenfalls durch die Kraft des Elektromagneten mit zusammengedrückt werden, dafür unterstützt bzw. unterstützen diese jedoch zum Ende des Bremsvorgangs die Rückstellung des Bremshebels, des Federspanners und mit diesem des Ankers. Gleichzeitig gleicht bzw. gleichen sie das Lagerspiel des Jochlagers aus.

Nach einer besonders vorteilhaften Ausgestaltung der Erfindung besteht die Wirkverbindung des Widerlagers mit dem Bremshebel aus einer koaxial zur Druckfeder durch den Federspanner hindurchgeführten Federspindel, die in diesem axial beweglich geführt ist. An ihrem oberen aus dem Federspanner herausragendem Ende weist die Federspindel einen Bund auf, der über eine Druckrolle auf dem Bremshebel aufliegt. Die Federspindel ist im Federspanner durch Gleitlager geführt und justierbar. Auch bei dieser Ausführung der Wirkverbindung ist das Widerlager an der Federspindel axial einstellbar und arretierbar angeordnet. Diese Ausführung der Wirkverbindung des Widerlagers mit dem Bremshebel ist einfacher und mit weniger Aufwand zu fertigen als die Variante unter Verwendung des aus Joch und Mitnehmerlaschen bestehenden Gestänges. Zudem wird der Kraftfluss auf kürzerem Weg und direkter auf den Bremshebel übertragen, wodurch das Spiel auf dem Übertragungsweg im Vergleich zu der ersten Ausführung deutlich geringer ist.

Weitere Vorteile und vorteilhafte Ausgestaltungen der Erfindung sind der nachfolgenden Beschreibung, der Zeichnung und den Ansprüchen entnehmbar.

### Zeichnung

Der Gegenstand der Erfindung ist in der Zeichnung am Beispiel einer Schwimmsattelbremse dargestellt und wird im Folgenden näher erläutert. Es zeigen:
- Fig. 1: einen Schnitt durch eine erfindungsgemäße elektromagnetische Aktivbremse im geöffneten Zustand,
- Fig. 2: eine Schnittdarstellung der Wirkverbindung zwischen Bremshebel und Federspanner,
- Fig. 3: die elektromagnetische Aktivbremse im aktiven Zustand,
- Fig. 4: das Detail des Mitnehmers aus Fig. 2 im aktiven Zustand,
- Fig. 5: eine zweite Ausführung der Arretierung des Bremshebels,
- Fig. 6: die Schnittdarstellung einer zweiten Ausführung der Wirkverbindung zwischen Bremshebel und Federspanner und
- Fig. 7: die Rückansicht der zweiten Ausführung in einem Teilschnitt.

### Beschreibung des Ausführungsbeispiels

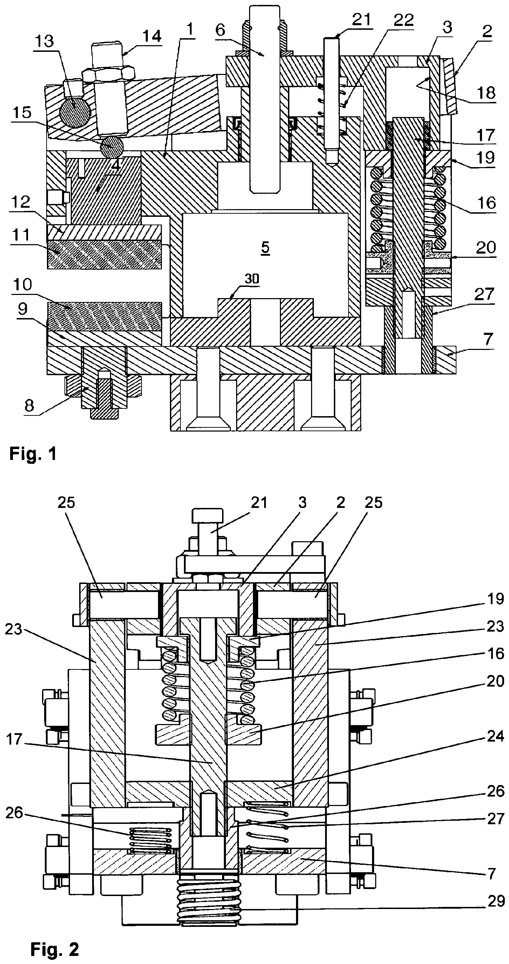

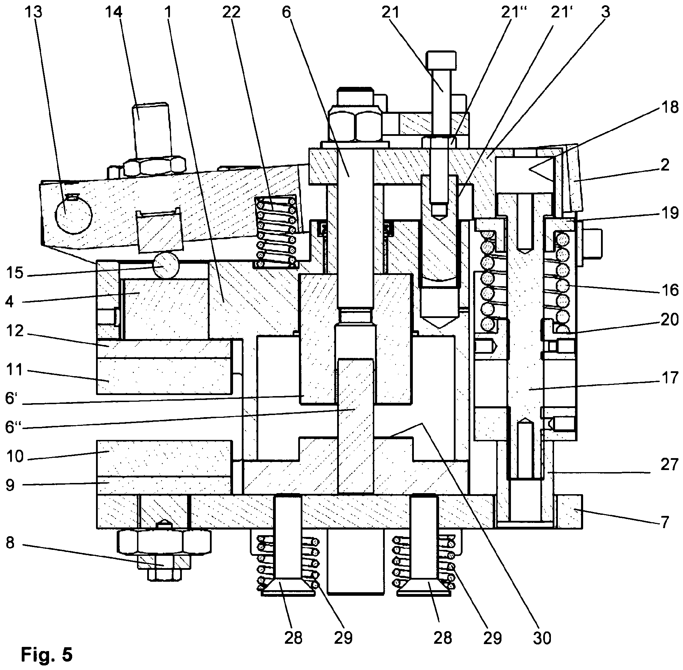

Fig. 1 zeigt eine elektromagnetische Schwimmsattelbremse im geöffneten oder auch gelüfteten Zustand, also in Bremsbereitschaft, im Schnitt. Sie besteht aus einem Bremsenkörper 1, einem Bremshebel 2, der mit seinem einen Ende in der Vertikalen schwenkbar mit diesem verbunden ist, einem zum Bremsenkörper 1 senkrecht beweglichen Federspanner 3, einem im Bremsenkörper 1 senkrecht geführten Druckstück 4 sowie einem Elektromagneten, dessen Magnetspulen 5 innerhalb des Bremsenkörpers 1 angeordnet sind und dessen Ankerspindel 6 den Federspanner 3 fest aufnimmt und in dem Bremsenkörper 1 vertikal beweglich geführt ist. Aus der Schnittdarstellung der Fig. 5 ist zu erkennen, dass die Ankerspindel 6 in ihrer axialen Verlängerung mit dem Anker 6' des Elektromagneten fest verbunden ist, der wiederum in einer fest im Bremsenkörper 1 angeordneten innenliegenden Ankerspindel 6" geführt ist. Bremsenkörper 1, Bremshebel 2, Federspanner 3 und Druckstück 4 umschließen die Magnetspulen 5 als eine kompakte Einheit.

Der Bremsenkörper 1 ist auf einer Grundplatte 7 montiert, die in vertikaler Verlängerung des Druckstückes 4 mittels einer unteren Justierschraube 8 eine untere Bremsbacke 9 fest aber einstellbar aufnimmt. Auf der unteren Bremsbacken 9 ist ein unterer Bremsklotz 10 befestigt. Über diesem ist ein oberer Bremsklotz 11 mittels einer oberen Bremsbacke 12 an dem Druckstück 4 befestigt. In dem von dem unteren und dem oberen Bremsklotz 10, 11 begrenzten Zwischenraum ist ein hier nicht dargestelltes abzubremsendes Bremsmittel positionierbar, beispielsweise eine rotierende Bremsscheibe oder ein linear bewegtes Teil, z. B. ein Seil, eine Kette oder eine Stange.

Wie oben erwähnt ist der Bremshebel 2 in dem Bremsenkörper 1 schwenkbar gelagert. Die Lagerung erfolgt an dem Ende des Bremshebels 2, an dem sich das Druckstück 4 befindet, mittels eines Schwenkbolzens 13. Unmittelbar neben dem Schwenkbolzen 13, oberhalb des Druckstücks 4 weist der Bremshebel 2 einen durch ihn hindurch ragenden Justierbolzen 14 auf, dessen untere Stirnfläche auf einen in einer Nut des Druckstückes 4 gelagerten Druckbolzen 15 aufliegt.

In seinem der schwenkbaren Lagerung gegenüberliegenden Bereich ist der Bremshebel 2 über einen in Fig. 1 nicht näher dargestellten Mitnehmer sowie eine Druckfeder 16 gelenkig mit dem axial in dem Bremsenkörper 1 geführten Federspanner 3 verbunden, so dass er bei einer axialen Bewegung des Federspanners 3 durch den Mitnehmer in die gleiche Richtung bewegt wird und dadurch seine Schwenkbewegung um seinen Schwenkbolzen 13 nach oben oder unten ausführt. Je nach Einstellung der Druckfeder 16 erfolgt diese Schwenkbewegung zeitgleich mit dem Federspanner 3 oder verzögert.

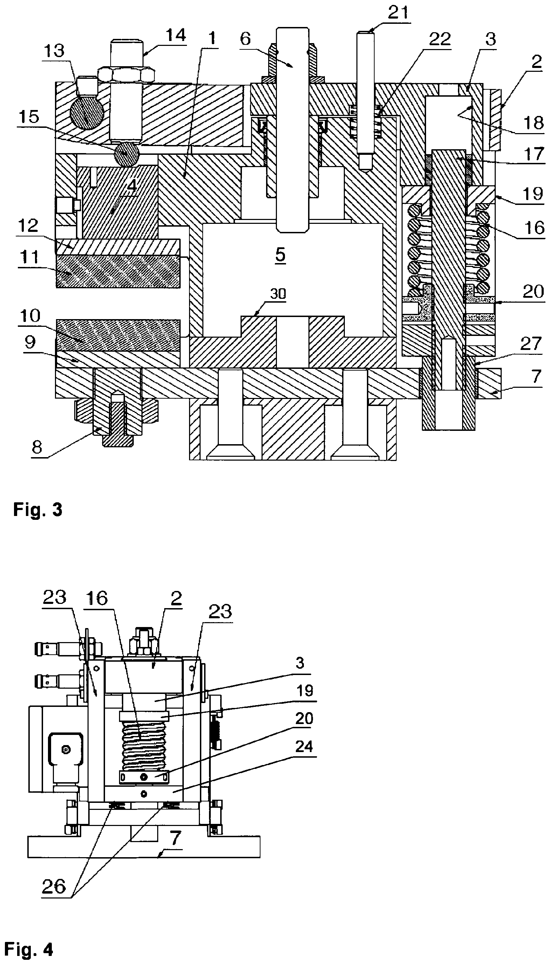

Der Federspanner 3 erstreckt sich horizontal von der Ankerspindel 6 entlang des Bremshebels 2 über den Bremskörper 1 hinaus und weist in diesem Bereich eine zweite Führung gegenüber dem Bremsenkörper 1 auf. In den Fig. 1 und 3 wird diese Führung durch einen in der Grundplatte 7 axial beweglich angeordneten Führungsbolzen 17 gewährleistet, der koaxial durch die Druckfeder 16 hindurchgeführt ist und mit seinem freien Ende in eine Führungsbohrung 18 des Federspanners 3 hineinragt. Die durch die Führungsbohrung 18 verbleibende Stirnfläche des Federspanners 3 liegt auf einem koaxial zum Führungsbolzen 17 angeordneten oberen Federanschlag 19 auf, an dem die Druckfeder 16 mit ihrem oberen Ende anstößt. An ihrem unteren Ende stützt sich die Druckfeder 16 an einem unteren Widerlager 20 ab, das an dem Führungsbolzen 17 in axialer Position einstellbar und arretierbar ist. Im vorliegenden Beispiel ist der Führungsbolzen 17 mit einem Außengewinde versehen, so dass das Widerlager 20 wie eine Mutter auf diesen aufgeschraubt werden kann. Die Arretierung des Widerlagers 20 erfolgt selbsthemmend durch die Kraft der Druckfeder 16.

Im vorliegenden Ausführungsbeispiel ist zur manuellen Betätigung der Schwimmsattelbremse in dem Bremsenkörper 1 ein Gewindestift 21 mit einer oberen Rückstellfeder 22 vorgesehen, die nach Abschluss des Bremsvorgangs den Federspanner 3 in seine Ausgangsstellung zurückbewegt.

Fig. 2 zeigt das Detail eines Mitnehmers zur gelenkigen Verbindung des Federspanners 3 mit dem Bremshebel 2. Der Mitnehmer besteht aus zwei parallel geführten Mitnehmerlaschen 23, die durch ein Joch 24 fest miteinander verbunden sind. Mit ihren freien Enden sind sie über ein Jochlager 25 mit dem Bremshebel 2 gelenkig verbunden. Das Joch 24 stützt sich über untere Rückstellfedern 26 auf der Grundplatte 7 ab. Das Joch 24 ist mittig mit einer Öffnung versehen, durch die der Führungsbolzen 17 hindurchgeführt ist. Auf sein durch die Öffnung hindurch ragendes Ende ist eine Spannhülse 27 aufgeschraubt, durch die er mit dem Joch 24 fest verbunden ist. Die Spannhülse 27 ist in der Grundplatte 7 axial beweglich aufgenommen, so dass auch der Führungsbolzen 17 gegen-über der Grundplatte 7 und, wie oben bereits erwähnt, folglich auch in dem Bremsenkörper 1 axial beweglich geführt ist.

Der Bremsenkörper 1 ist mit seiner Grundplatte 7 mittels Schrauben 28 und Dämpfungsfedern 29 an einer nicht näher dargestellten Anlage schwingungsgedämpft montiert.

Bei der im aktiven, also im Bremszustand in den Fig. 3 und 4 dargestellten elektromagnetischen Schwimmsattelbremse sowie in der Ausführung gem. Fig. 5 wurden zur Bezeichnung der gleichen Bestandteile die gleichen Bezugszahlen wie in den Fig. 1 und 2 verwendet. Die Ausführungsvariante der Fig. 5 unterscheidet sich von der in Fig. 1 dargestellten durch die separate Anordnung der oberen Rückstellfeder 22 im Bremshebel 2 zwischen Ankerspindel 6 und der Lagerung des Bremshebels 2. Ferner ist der zur Arretierung des Federspanners 3 gegenüber dem Bremsenkörper 1 vorgesehene Gewindestift 21 mit einem Führungsstift 21' verbunden, der in dem Bremsenkörper 1 einschraubbar ist. Der Gewindestift 21 wird gegenüber dem Bremsenkörper 1 mittels einer Feststellschraube 21" arretiert.

In dieser Schnittdarstellung ist auch die Führung des Ankers 6' in der innenliegenden Ankerspindel 6" sowie die Verbindung der Ankerspindel 6 mit dem Anker 6' erkennbar.

Nachfolgend wird die Wirkungsweise der elektromagnetischen Schwimmsattelbremse beschrieben:
Die Fig. 1, 2 und 5 zeigen die elektromagnetische Schwimmsattelbremse im geöffneten bzw. gelüfteten Zustand, in dem sie stromlos ist. Bei Bestromung der Magnetspulen 5 bewegt sich der Anker 6' in Richtung seiner Ankerklebefläche 30, die sich im unteren Bereich des Elektromagneten befindet, wodurch sich, wie aus den Fig. 3 und 4 erkennbar, auch der Federspanner 3 senkrecht nach unten bewegt, während er dabei gleichzeitig den durch die Spannhülse 27 in der Grundplatte 7 geführten Führungsbolzen 17 und die zwischen dem oberen Federanschlag 19 und dem unteren Widerlager 20 vorgespannte Druckfeder 16 nach unten bewegt, ohne Letztere aufgrund ihrer eingestellten Vorspannung zusammenzudrücken. In der Ausführungsvariante der Fig. 2 wird die vorjustierte Kraft der Druckfeder 16 über das mit dem Führungsbolzen 17 fest verbundene Joch 24 sowie die am Joch 24 befestigten beiden Mitnehmerlaschen 23 auf den Bremshebel 2 übertragen. Dabei drückt der mit dem Bremshebel 2 fest verbundene Justierbolzen 14 auf den Druckbolzen 15, so dass sich der obere Bremsklotz 11 in Richtung des unteren Bremsklotzes 10 bewegt, wodurch sich der Zwischenraum zwischen beiden Bremsklötzen 10, 11 verringert und die Bremsklötze 10, 11 sich an dem nicht dargestellte Bremsmittel anlegen. Zu diesem Zeitpunkt bzw. in der Stellung des Bremshebels 2 hat der Anker 6' die Ankerklebefläche 30 noch nicht erreicht, so dass er ab jetzt, also zu dem Zeitpunkt, an dem die Bremsklötze 10, 11 auf das abzubremsende Bremsmittel treffen, auf dem Rest seines Weges zu der Ankerklebefläche 30 die voreingestellte Spannkraft der Druckfeder 16 überwindet und über den Federspanner 3 die Druckfeder 16 komprimiert. Bei dieser weiteren Abwärtsbewegung des Federspanners 3 werden lediglich die Druckfeder 16, bzw. in der Variante der Fig. 2, die unteren Rückstellfedern 26 weiter komprimiert, wodurch sich der Anpressdruck der Bremsklötze 10, 11 auf das abzubremsende Bremsmittel erhöht, d. h. der eigentliche Bremsvorgang abläuft. Der Führungsbolzen 17 selbst und damit auch der Bremshebel 2 bewegen sich nicht mehr.

Zur Beendigung des Bremsvorganges wird der Elektromagnet stromlos geschaltet, wodurch die Ankerklebefläche 30 ihre Haftkraft gegenüber dem Anker 6' verliert. Dadurch entspannt sich die Druckfeder 16, wobei sie gleichzeitig den Federspanner 3, den Anker 6' mit seiner Ankerspindel 6 und den Bremshebel 2 in seine Ausgangslage zurückdrückt. In der alternativen Ausführung nach Fig. 2 unterstützen die unteren Rückstellfedern 26 das Rückschwenken des Bremshebels 2 in seine Ausgangslage.

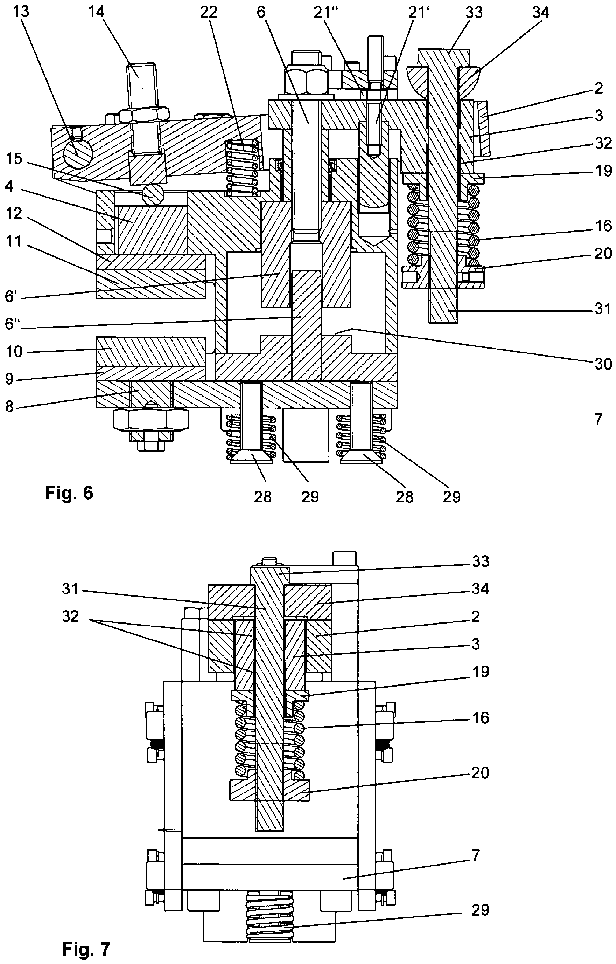

Die Fig. 6 und 7 zeigen eine zweite Ausführung der Wirkverbindung zwischen dem Bremshebel 2 und dem Federspanner 3. Anstelle des im Bremsenkörper 1 geführten Führungsbolzens 17 ist eine Federspindel 31 durch den Federspanner 3 und koaxial durch die Druckfeder 16 hindurchgeführt. Sie ist im Federspanner 3 mittels Gleitlagern 32 axial geführt und weist an ihrem aus dem Federspanner herausragenden oberen Ende einen Bund 33 auf. Sie ist ferner durch den Bremshebel 2 sowie eine auf diesem aufliegende Druckrolle 34 hindurchgeführt, auf der die Ringfläche des Bundes 33 aufliegt. Wie auch in der ersten Ausführung sind der obere Federanschlag 19 und das Widerlager 20 an der Federspindel befestigt und zwischen beiden die Druckfeder 16 eingespannt.

Die grundsätzliche Wirkungsweise dieser Ausführungsform entspricht der bereits zu den Fig. 1 bis 5 beschriebenen Variante. Der Vorteil besteht darin, dass die Wirkverbindung zwischen Bremshebel 2 und Federspanner 3 direkt in einer axialen Verbindung über die Federspindel 31 sowie die Druckrolle 34 erfolgt und somit auf einem deutlich kürzerem Weg als bei der ersten Variante über das Joch 24 und die Mitnehmerlaschen 23. Auch bei dieser Ausführungsform drückt der Federspanner 3 mit seiner Ringfläche bei Bestromung des Elektromagneten auf den oberen Federanschlag 19, wodurch die fest mit diesem verbundene Federspindel 31 axial nach unten bewegt wird und dabei über die Druckrolle 34 den Bremshebel 2 nach unten schwenkt bis die Bremsklötze 10, 11 an dem abzubremsenden Teil anliegen. Bei weiterer Abwärtsbewegung des Ankers 6 drückt der Federspanner 3 die Druckfeder 16 zusammen bis er an der Ankerklebefläche 30 anschlägt, wodurch, wie bereits oben beschrieben, sich die Bremskraft aufbaut. Nach Abschaltung des Stromes löst sich der Anker 6 von der Ankerklebefläche, so dass Federspanner 3 und Anker 6 beim Entspannen der Druckfeder 16 in ihre Ausgangslage zurückgedrückt werden, wodurch auch die Druckrolle 34 vom Bund 33 der Federspindel 31 frei gegeben wird, so dass die obere Rückstellfeder den Bremshebel 2 in seine Ausgangslage zurückbewegen kann.

Alle hier dargestellten Merkmale können sowohl einzeln als auch in beliebiger Kombination miteinander erfindungswesentlich sein.

**Bezugszahlenliste**

| | | | |
|---|---|---|---|
| 1 | Bremsenkörper | 21 | Gewindestift |
| 2 | Bremshebel | 21' | Führungsstift |
| 3 | Federspanner | 21" | Feststellschraube |
| 4 | Druckstück | 22 | Obere Rückstellfeder |
| 5 | Magnetspule | 23 | Mitnehmerlaschen |
| 6 | Ankerspindel | 24 | Joch |
| 6' | Anker | 25 | Jochlager |
| 6" | Inneren Ankerspindel | 26 | Untere Rückstellfeder |
| 7 | Grundplatte | 27 | Spannhülse |
| 8 | Untere Justierschraube | 28 | Schrauben |
| 9 | Untere Bremsbacke | 29 | Dämpfungsfeder |
| 10 | Unterer Bremsklotz | 30 | Ankerklebefläche |
| 11 | Oberer Bremsklotz | 31 | Federspindel |
| 12 | Obere Bremsbacke | 32 | Gleitlager |
| 13 | Schwenkbolzen | 33 | Bund |
| 14 | Justierbolzen | 34 | Druckrolle |
| 15 | Druckbolzen | | |
| 16 | Druckfeder | | |
| 17 | Führungsbolzen | | |
| 18 | Führungsbohrung | | |
| 19 | Oberer Federanschlag | | |
| 20 | Unteres Widerlager | | |

## Patentansprüche

1. Elektromagnetische Aktivbremse, bestehend aus
- einem Bremsenkörper (1),
- einer Bremseinrichtung mit mindestens zwei gegenüberliegenden Bremsbacken (9, 12), die im stromlosen Zustand der Aktivbremse von einem abzubremsenden Bauteil beabstandet sind, wobei eine der Bremsbacken (12) zur Einleitung des Bremsvorgangs über einen Bremshebel (2) in Richtung der anderen Bremsbacke (9) bewegbar ist,
- und einem in dem Bremsenkörper (1) angeordneten Elektromagneten (5), dessen Anker (6) mit dem Bremshebel (2) in Wirkverbindung steht,
**dadurch gekennzeichnet,**
**dass** der Anker (6) des Elektromagneten (5) mit einem im Bremsenkörper (1) geführten Federspanner (3) fest verbunden ist, der bei Bestromung des Elektromagneten (5) von dessen Anker (6) in axialer Richtung des Ankers (6) bewegt wird und auf diesem Weg eine Feder (16) gegen ein Widerlager (20) spannt, das mit dem Bremshebel (2) in Wirkverbindung steht und in Richtung des Weges des Federspanners (3) axial einstellbar angeordnet ist.

2. Elektromagnetische Aktivbremse nach Anspruch 1,
**dadurch gekennzeichnet,**
**dass** die elektromagnetische Aktivbremse eine Schwimmsattelbremse ist.

3. Elektromagnetische Aktivbremse nach Anspruch 1 oder 2,
**dadurch gekennzeichnet,**
**dass** als Feder eine Druckfeder (16) verwendet wird.

4. Elektromagnetische Aktivbremse nach Anspruch 1, 2 oder 3,
**dadurch gekennzeichnet,**
**dass** die Wirkverbindung des Widerlagers (20) mit dem Bremshebel (2) aus einem koaxial zu der Druckfeder (16) und im Bremsenkörper (1) axial beweglich angeordneten Führungsbolzen (17) besteht, der mit einem Joch (24) fest verbunden ist, das über Mitnehmerlaschen (23) mit dem Bremshebel (2) gelenkig verbunden ist.

5. Elektromagnetische Aktivbremse nach Anspruch 4,
**dadurch gekennzeichnet,**
**dass** das Widerlager (20) an dem Führungsbolzen (17) axial einstellbar und arretierbar ist.

6. Elektromagnetische Aktivbremse nach einem der Ansprüche 3 bis 5,
**dadurch gekennzeichnet,**
**dass** die Vorspannung der Druckfeder (16) durch eine Änderung der axialen Position des Widerlagers (20) an dem Führungsbolzen (17) einstellbar ist.

7. Elektromagnetische Aktivbremse nach einem der Ansprüche 4 bis 6,
**dadurch gekennzeichnet,**
**dass** der Führungsbolzen (17) in einer Führungsbohrung (18) des Federspanners (3) aufgenommen und mittels einer fest mit dem Führungsbolzen (17) verbundenen Spannhülse (27) in dem Bremsengehäuses (1) axial geführt ist.

8. Elektromagnetische Aktivbremse nach einem der Ansprüche 1 bis 7,
**dadurch gekennzeichnet,**
**dass** die axiale Position des Federspanners (3) gegenüber dem Bremsenkörper (1) der Aktivbremse arretierbar ist.

9. Elektromagnetische Aktivbremse nach Anspruch 8,
**dadurch gekennzeichnet,**
**dass** die axiale Position des Federspanners (3) mittels eines in den Bremsenkörper (1) einschraubbaren Gewindestiftes (21) arretierbar ist.

10. Elektromagnetische Aktivbremse nach einem der Ansprüche 1 bis 9,
**dadurch gekennzeichnet,**
**dass** zwischen dem Bremshebel (2) und dem Bremsenkörper (1) eine Rückstellfeder (22) angeordnet ist.

11. Elektromagnetische Aktivbremse nach Anspruch 9 und 10,
**dadurch gekennzeichnet,**
**dass** die Rückstellfeder (22) koaxial zum Gewindestift (21) angeordnet ist.

12. Elektromagnetische Aktivbremse nach Anspruch 12,
**dadurch gekennzeichnet,**
**dass** sich das Joch (24) über mindestens eine zusätzliche Rückstellfeder (26) an dem Bremsenkörper (1) der Aktivbremse abstützt.

13. Elektromagnetische Aktivbremse nach Anspruch 1, 2 oder 3,
**dadurch gekennzeichnet,**
**dass** die Wirkverbindung des Widerlagers (20) mit dem Bremshebel (2) aus einer koaxial zur Druckfeder (16) durch den Federspanner (3) hindurchgeführ-ten Federspindel (31) besteht, die in diesem axial beweglich geführt ist, die an ihrem oberen aus dem Federspanner (3) herausragenden Ende einen Bund (33) aufweist, der über eine Druckrolle (34) auf dem Bremshebel (2) aufliegt.

14. Elektromagnetische Aktivbremse nach Anspruch 13,
**dadurch gekennzeichnet,**
**dass** das Widerlager (20) an der Federspindel (31) axial einstellbar und arretierbar ist.

## Claims

1. Electromagnetic active brake, consisting of
- a brake body (1),
- a braking device having at least two oppositely located brake shoes (9, 12) which in the de-energised state of the active brake are spaced apart from a component to be braked, wherein one of the brake shoes (12) is movable by way of a brake lever (2) in the direction of the other brake shoe (9) to initiate the braking operation,
- and an electromagnet (5) arranged in the brake body (1), the armature (6) of which is in operative connection with the brake lever (2),
**characterised in that**
the armature (6) of the electromagnet (5) is rigidly joined to a spring compressor (3) which is guided in the brake body (1) and which, on energisation of the electromagnet (5), is moved by the armature (6) thereof in the axial direction of the armature (6) and **in that** way clamps a spring (16) against a counter-bearing (20) which is in operative connection with the brake lever (2) and is arranged so as to be axially displaceable in the direction of the path of the spring compressor (3).

2. Electromagnetic active brake according to claim 1,
**characterised in that**
the electromagnetic active brake is a floating calliper brake.

3. Electromagnetic active brake according to claim 1 or 2, **characterised in that**
a compression spring (16) is used as the spring.

4. Electromagnetic active brake according to claim 1, 2 or 3,
**characterised in that**
the operative connection of the counter-bearing (20) to the brake lever (2) consists of a guide pin (17) which is arranged coaxially with respect to the compression spring (16) and so as to be axially movable in the brake body (1), the guide pin being rigidly connected to a yoke (24) which is articulatedly connected to the brake lever (2) by means of link plates (23).

5. Electromagnetic active brake according to claim 4,
**characterised in that**
the counter-bearing (20) is axially adjustable and lockable on the guide pin (17).

6. Electromagnetic active brake according to any one of claims 3 to 5,
**characterised in that**
the initial tension of the compression spring (16) is adjustable by a change in the axial position of the counter-bearing (20) on the guide pin (17).

7. Electromagnetic active brake according to any one of claims 4 to 6,
**characterised in that**
the guide pin (17) is mounted in a guide bore (18) of the spring compressor (3) and is guided axially in the brake housing (1) by means of a clamping sleeve (27) rigidly connected to the guide pin (17).

8. Electromagnetic active brake according to any one of claims 1 to 7,
**characterised in that**
the axial position of the spring compressor (3) is lockable with respect to the brake body (1) of the active brake.

9. Electromagnetic active brake according to claim 8,
**characterised in that**
the axial position of the spring compressor (3) is lockable by means of a threaded peg (21) which can be screwed into the brake body (1).

10. Electromagnetic active brake according to any one of claims 1 to 9,
**characterised in that**
a restoring spring (22) is arranged between the brake lever (2) and the brake body (1).

11. Electromagnetic active brake according to claim 9 and 10,
**characterised in that**
the restoring spring (22) is arranged coaxially with respect to the threaded peg (21).

12. Electromagnetic active brake according to claim 12,
**characterised in that**
the yoke (24) is supported on the brake body (1) of the active brake by way of at least one additional restoring spring (26).

13. Electromagnetic active brake according to claim 1, 2 or 3,
**characterised in that**
the operative connection of the counter-bearing (20) to the brake lever (2) consists of a spring spindle (31) which passes through the spring compressor (3) coaxially with respect to the compression spring (16), which spring spindle is guided so as to be axially movable therein and has, at its upper end projecting out of the spring compressor (3), a collar (33) which is supported on the brake lever (2) by way of a pressure roll (34).

14. Electromagnetic active brake according to claim 13,
**characterised in that**
the counter-bearing (20) is axially adjustable and lockable on the spring spindle (31).

## Revendications

1. Frein actif électromagnétique, composé
- d'un corps de frein (1),
- d'un dispositif de freinage présentant au moins deux mâchoires de frein (9, 12) opposées qui, dans l'état non alimenté en courant du frein actif, sont situés à une certaine distance d'un élément à freiner, une des mâchoires de frein (12) étant déplaçable en direction de l'autre mâchoire de frein (9) au moyen d'un levier de frein (2) pour déclencher le freinage
- et d'un électroaimant (5) disposé dans le corps de frein (1), dont l'induit (6) est en liaison fonctionnelle avec le levier de frein (2),
**caractérisé en ce**
**que** l'induit (6) de l'électroaimant (5) est relié de manière fixe à un compresseur de ressort (3) guidé dans le corps de frein (1), lequel compresseur, lors d'une alimentation en courant de l'électroaimant (5), est déplacé par l'induit (6) dans la direction axiale de l'induit (6) et compresse ce faisant un ressort (16) contre une butée (20) qui est en liaison fonctionnelle avec le levier de frein (2) et qui est disposée de manière réglable axialement dans la direction de déplacement du compresseur de ressort (3).

2. Frein actif électromagnétique selon la revendication 1,
**caractérisé en ce**
**que** le frein actif électromagnétique est un frein à étrier flottant.

3. Frein actif électromagnétique selon l'une des revendications 1 ou 2,
**caractérisé en ce**
**qu'**un ressort de compression (16) est utilisé comme ressort.

4. Frein actif électromagnétique selon l'une des revendications 1, 2 ou 3,
**caractérisé en ce**
**que** la liaison fonctionnelle de la butée (20) avec le levier de frein (2) se compose d'un axe de guidage (17) disposé coaxialement au ressort de compression (16) et mobile axialement dans le corps de frein (1), qui est relié de manière fixe à une culasse (24) qui est reliée de manière articulée au levier de frein (2) par l'intermédiaire de pattes d'entraînement (23).

5. Frein actif électromagnétique selon la revendication 4,
**caractérisé en ce**
**que** la butée (20) est réglable axialement et blocable sur l'axe de guidage (17).

6. Frein actif électromagnétique selon l'une des revendications 3 à 5,
**caractérisé en ce**
**que** la précontrainte du ressort de compression (16) est réglable par un changement de la position axiale de la butée (20) sur l'axe de guidage (17).

7. Frein actif électromagnétique selon l'une des revendications 4 à 6,
**caractérisé en ce**
**que** l'axe de guidage (17) est logé dans un alésage de guidage (18) du compresseur de ressort (3) et guidé axialement dans le boîtier de frein (1) au moyen d'une douille de serrage (27) reliée de manière fixe à l'axe de guidage (17).

8. Frein actif électromagnétique selon l'une des revendications 1 à 7,
**caractérisé en ce**
**que** la position axiale du compresseur de ressort (3) par rapport au corps de frein (1) du frein actif est blocable.

9. Frein actif électromagnétique selon la revendication 8,
**caractérisé en ce**
**que** la position axiale du compresseur de ressort (3) est blocable au moyen d'une vis sans tête (21) vissable dans le corps de frein (1).

10. Frein actif électromagnétique selon l'une des revendications 1 à 9,
**caractérisé en ce**
**qu'**un ressort de rappel (22) est disposé entre le levier de frein (2) et le corps de frein (1).

11. Frein actif électromagnétique selon la revendication 9 et la revendication 10,
**caractérisé en ce**
**que** le ressort de rappel (22) est disposé coaxialement à la vis sans tête (21).

12. Frein actif électromagnétique selon la revendication 12,
**caractérisé en ce**
**que** la culasse (24) s'appuie sur le corps de frein (1) du frein actif par au moins un ressort de rappel (26) supplémentaire.

13. Frein actif électromagnétique selon l'une des revendications 1, 2 ou 3,
**caractérisé en ce**
**que** la liaison fonctionnelle de la butée (20) avec le levier de frein (2) se compose d'une broche de ressort (31) passée à travers le compresseur de ressort (3) coaxialement au ressort de compression (16), qui est guidée de manière mobile axialement dans le compresseur de ressort (3) et qui présente à son extrémité supérieure dépassant du compresseur de ressort (3) un collet (33) qui repose sur le levier de frein (2) par l'intermédiaire d'un galet de pression (34).

14. Frein actif électromagnétique selon la revendication 13,
**caractérisé en ce**
**que** la butée (20) est réglable axialement et blocable sur la broche de ressort (31).
